# EUROPEAN PATENT APPLICATION

(11) **EP 4 521 617 A1**
(43) Date of publication of application: **12.03.2025**
(21) Application number: 23829534.9
(22) Date of filing: 27.03.2023
(51) Int. Cl.: H02K 16/02, H02K 7/00, H02K 15/16, H02K 15/00, H02K 15/02, H02K 15/03, H02K 15/14, H02J 7/04

(54) **DISC-TYPE MOTOR AND ASSEMBLING METHOD THEREFOR, POWERTRAIN AND VEHICLE**

(30) Priority: 30.06.2022 CN 202210770799
(71) Applicant: Huawei Digital Power Technologies Co., Ltd., Shenzhen, Guangdong 518043 (CN)
(72) Inventor: SHI, Chaojie, Shenzhen, Guangdong 518043 (CN); LI, Xiaogang, Shenzhen, Guangdong 518043 (CN); ZHOU, Zhao, Shenzhen, Guangdong 518043 (CN)
(74) Representative: Gill Jennings & Every LLP
(86) International application number: PCT/CN2023/084013
(87) International publication number: WO 2024/001343

(57) **Abstract**

This application provides a disk motor, an assembly method for the disk motor, a powertrain, and a vehicle. The disk motor includes a rotating shaft and a first rotor, a stator, and a second rotor that are sleeved on the rotating shaft. The first rotor, the stator, and the second rotor are sequentially spaced apart. The stator is rotatably connected to the rotating shaft. The rotating shaft includes a first shaft body and a second shaft body that are detachably connected to each other, the first shaft body is fastened to the first rotor, and the second shaft body is fastened to the second rotor. Before assembly, dynamic balance adjustment is performed on the first rotor and the first shaft body, dynamic balance adjustment is performed on the second rotor and the second shaft body, then, the first shaft body and the second shaft body are connected to each other, and the stator is mounted, to improve accuracy of dynamic balance adjustment and improve assembly convenience.

## Description

### CROSS-REFERENCE TO RELATED APPLICATIONS

This application claims priority to Chinese Patent Application No. 202210770799.7, filed with the China National Intellectual Property Administration on June 30, 2022 and entitled "DISK MOTOR, ASSEMBLY METHOD FOR DISK MOTOR, POWERTRAIN, AND VEHICLE", which is incorporated herein by reference in its entirety.

### TECHNICAL FIELD

This application relates to the field of motors, and specifically, to a disk motor, an assembly method for the disk motor, a powertrain, and a vehicle.

### BACKGROUND

Multi-motorization is one of the development trends of a drive motor of an electric vehicle. A final expected form of the drive motor is to implement independent driving of each wheel, to obtain best power performance and maneuverability. Therefore, miniaturization of the motor has become an industry development trend. Under a specific power requirement, there are two ways to make a motor small: One is to make the motor have a high speed, and the other is to make the motor have a high torque density design. Currently, a design of the motor is close to a limit (for example, 20,000 rpm) of a mechanical system (mainly a serrated shaft), but there is still a large space for the high torque density design. An axial flux motor, also referred to as a disk motor, is a motor that forms a closed flux loop through an axial air gap surface of the motor, and has high torque density. An existing disk motor usually includes three structures: a single-stator single-rotor structure, a dual-stator single-rotor structure, and a dual-rotor single-stator structure. The dual-rotor single-stator structure can achieve highest torque density in the foregoing three structures. Therefore, a dual-rotor single-stator motor also gradually becomes a research hotspot.

However, for an existing motor with the dual-rotor single-stator structure, dynamic balance adjustment needs to be performed on a rotor system (rotor+rotating shaft) of the motor before assembly. Currently, a method is to perform dynamic balance adjustment on the rotor through a dummy shaft, and then assemble a stator, the rotor, and the rotating shaft. Because there is a deviation between assembling through the dummy shaft and assembling through an actual rotating shaft, a deviation between a centroid and a rotation center of an entire rotor system is limited by an inherent deviation (approximately 6 to 9 µm) of a current process capability. According to a dynamic balance requirement on the motor in GB9239.1-2006, the motor with a maximum rotational speed more than 950 rpm needs to meet a dynamic balance requirement in G2.5. For example, if a rotational speed is 10,000 rpm, a centroid deviation needs to be limited within approximately 2.5 µm. However, in view of the foregoing inherent deviation, the solution of performing dynamic balance adjustment through the dummy shaft cannot theoretically meet the dynamic balance requirement in G2.5. Another dynamic balance adjustment method is to first perform dynamic balance adjustment on a system with two rotors, then disassemble one of the rotors, and mount the rotor after a stator is mounted. In this method, there are many assembly steps, which is not conducive to improving production efficiency. In addition, repeated disassembly and assembly of a component with interference may easily cause a decrease in reliability of the entire machine. Consequently, the existing dynamic balance adjustment method cannot consider both accurate dynamic balance adjustment and convenient production.

### SUMMARY

This application provides a disk motor, an assembly method for the disk motor, a powertrain, and a vehicle, to improve accuracy of dynamic balance adjustment and improve assembly convenience.

According to a first aspect, this application provides a disk motor. The disk motor includes a rotating shaft and a first rotor, a stator, and a second rotor that are sleeved on the rotating shaft. The first rotor, the stator, and the second rotor are sequentially spaced apart. The stator is rotatably connected to the rotating shaft, the rotating shaft includes a first shaft body and a second shaft body that are detachably connected to each other, the first shaft body is fastened to the first rotor, and the second shaft body is fastened to the second rotor.

The rotating shaft of the disk motor in this application may be divided into the first shaft body and the second shaft body. The first shaft body is connected to the first rotor, and the second shaft body is connected to the second rotor. Before assembly, dynamic balance adjustment is performed on the first rotor and the first shaft body, and dynamic balance adjustment is performed on the second rotor and the second shaft body. Then, the first shaft body is connected to the second shaft body, and the stator is mounted. In a dynamic balance adjustment process, the first rotor and the second rotor each are adjusted by using a true shaft, so that a problem of poor accuracy caused by using a dummy shaft can be avoided. In the dynamic balance adjustment process, a dynamic balance indicator of a single rotor system (for example, a rotor system including the first rotor and the first shaft body or a rotor system including the second rotor and the second shaft body) may be controlled within a dynamic balance indicator of the entire disk motor (that is, a single-disk dynamic balance requirement is tightened), so that a final dynamic balance indicator of the disk motor meets the requirement. During assembly of the disk motor with this structure, the rotor on which dynamic balance adjustment is performed does not need to be disassembled, and the entire motor is assembled at a time, so that convenience and reliability of assembly can be ensured.

In an optional implementation, a connection manner of the first shaft body and the second shaft body includes but is not limited to an interference fit connection, a bonding connection, a coupling connection, a pin connection, a flange connection, and the like. A specific connection manner of the first shaft body and the second shaft body is not limited in this application, provided that the first shaft body and the second shaft body can be connected.

In an optional implementation, at least one of a side surface that is of the first rotor and that is perpendicular to the rotating shaft and away from the stator and a side surface that is of the second rotor and that is perpendicular to the rotating shaft and away from the stator is provided with a weight adjustment component. In an optional implementation, at least one of a circumferential surface of the first rotor and a circumferential surface of the second rotor may be provided with a weight adjustment component.

In an optional implementation, the weight adjustment component includes a fastening element disposed on the first rotor and the second rotor and a weight adjustment block connected to the fastening element through cooperation. For example, the fastening element includes a hole or a protruding column.

In an optional implementation, the fastening element is disposed on the side surface that is of the first rotor and that is perpendicular to the rotating shaft and away from the stator, there are a plurality of fastening elements, and the plurality of fastening elements form concentric rings in a radial direction of the first rotor. For example, in any one of the rings formed by the fastening elements, a plurality of fastening elements are evenly arranged in a circumferential direction of the first rotor. The fastening element is disposed on the side surface that is of the second rotor and that is perpendicular to the rotating shaft and away from the stator, there are a plurality of fastening elements, and the plurality of fastening elements form concentric rings in a radial direction of the second rotor. For example, in any one of the rings formed by the fastening elements, a plurality of fastening elements are evenly arranged in a circumferential direction of the second rotor.

According to a second aspect, this application provides an assembly method for the foregoing disk motor. The assembly method includes the following steps:
performing dynamic balance adjustment on the first shaft body and the first rotor that are fastened to each other, and performing dynamic balance adjustment on the second shaft body and the second rotor that are fastened to each other; and
sleeving the stator on at least one of the first shaft body and the second shaft body, and fastening the first shaft body and the second shaft body to each other.

In an optional implementation, the performing dynamic balance adjustment on the first shaft body and the first rotor that are fastened to each other includes: adjusting the weight adjustment component, for a deviation between a centroid and a rotation center of a rotation unit including the first shaft body and the first rotor to satisfy a preset dynamic balance level standard at a preset rotational speed.

In an optional implementation, the performing dynamic balance adjustment on the second shaft body and the second rotor that are fastened to each other includes: adjusting the weight adjustment component, for a deviation between a centroid and a rotation center of a rotation unit including the second shaft body and the second rotor to satisfy a preset dynamic balance level standard at a preset rotational speed.

According to a third aspect, this application further provides a powertrain. The powertrain may include a transmission mechanism and the disk motor according to the first aspect of this application. The transmission mechanism is connected to the disk motor. The disk motor may drive the transmission mechanism to move.

According to a fourth aspect, this application further provides a vehicle. The vehicle includes the disk motor in this application.

For technical effects that may be implemented in the second aspect and the fourth aspect, refer to corresponding effect descriptions in the first aspect. Details are not described herein again.

### BRIEF DESCRIPTION OF DRAWINGS

FIG. 1 is a diagram of a structure of a disk motor according to an embodiment;
FIG. 2 is a diagram of a structure of a bonding connection between a first shaft body and a second shaft body;
FIG. 3 is a diagram of another connection manner of a first shaft body and a second shaft body;
FIG. 4 is a diagram of another connection manner of a first shaft body and a second shaft body;
FIG. 5 is a diagram of a structure of a side surface that is of a first rotor and that is away from a stator; and
FIG. 6 and FIG. 7 are diagrams of an assembly process of a disk motor according to this application.

Reference numerals:
10: disk motor; 11: first rotor; 12: stator; 13: second rotor; 14: rotating shaft; 141: first shaft body;
142: second shaft body; 143: positioning protrusion; 144: positioning step; 145: first key slot; 146: second key slot;
147: connection key; 148: coupling; 149: first flange; 150: second flange;
15: bearing; 16: magnet; 20: weight adjustment component; 21: fastening element; and 22: weight adjustment block.

### DESCRIPTION OF EMBODIMENTS

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

For ease of understanding, dynamic balance mentioned in this application is first explained and described. The dynamic balance is research content of rotor dynamics, and is an operation of determining a position and a magnitude of imbalance (a centrifugal force and centrifugal force couple) generated when a rotor rotates, and eliminating the imbalance. The imbalance causes transverse vibration of the rotor, and causes the rotor to be subject to an unnecessary dynamic load. This is not conducive to a normal operation of the rotor. Therefore, before a motor is assembled, dynamic balance adjustment needs to be performed on the rotor, so that a centroid of the rotor is close to a rotation center in a rotation process.

Currently, there is no mature dynamic balance adjustment solution for a multi-rotor disk motor (for example, a disk motor with two rotors and a single stator). In most cases, dynamic balance is performed on each rotor through a dummy shaft, and then the rotors are assembled as a whole. In this adjustment solution, impact of the dummy shaft on the dynamic balance is not considered. Consequently, bearing reliability of the disk motor is reduced, and a problem of excessive vibration (to be specific, a vibration amplitude of the motor exceeds a preset value) may be introduced.

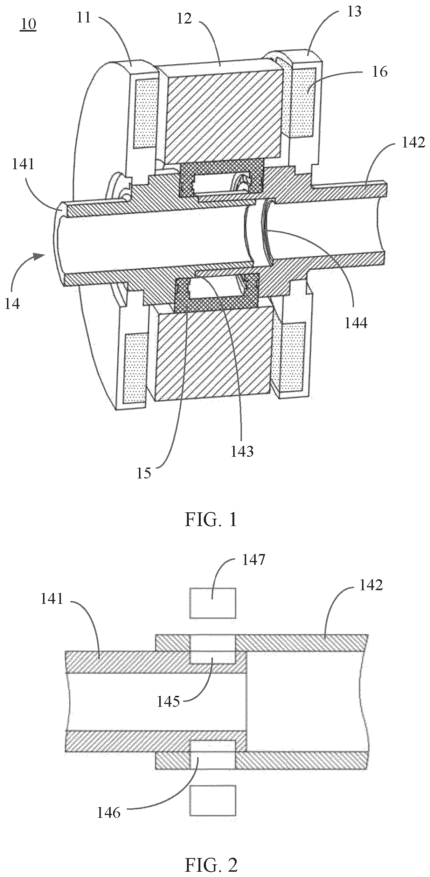

To resolve the foregoing problem, this application provides a disk motor. FIG. 1 is a diagram of a structure of a disk motor 10 according to an embodiment. As shown in FIG. 1, in an embodiment, the disk motor 10 includes a rotating shaft 14 and a first rotor 11, a stator 12, and a second rotor 13 that are disposed on the rotating shaft 14. The first rotor 11 and the second rotor 13 are respectively disposed on two sides of the stator 12, and a gap is reserved between the stator 12 and each of the first rotor 11 and the second rotor 13. The first rotor 11, the stator 12, and the second rotor 13 each may be of a disk structure, and radial sizes of the first rotor 11, the stator 12, and the second rotor 13 may be the same.

As shown in FIG. 1, the rotating shaft 14 may include a first shaft body 141 and a second shaft body 142. The first shaft body 141 and the second shaft body 142 are of a detachably connected structure. As an example for description, a connection manner of the first shaft body 141 and the second shaft body 142 may be one of an interference fit connection, a bonding connection, a coupling connection, a pin connection, or a flange connection. The bonding connection includes but is not limited to a flat key connection, a spline connection, or a wedge key connection. The following describes in detail various connection manners of the first shaft body 141 and the second shaft body 142 with reference to specific accompanying drawings.

FIG. 1 is used as an example. The first shaft body 141 and the second shaft body 142 may be connected to each other through interference fit. Both the first shaft body 141 and the second shaft body 142 may be hollow shaft bodies. To be specific, a through hole extending in an axial direction may be provided inside the first shaft body 141, a through hole extending in an axial direction may also be provided inside the second shaft body 142, and an outer circumferential surface of the first shaft body 141 may be partially inserted into the through hole of the second shaft body 142. After the first shaft body 141 is partially inserted into the second shaft body 142, a circumferential surface of the first shaft body 141 presses against an inner circumferential surface of the second shaft body 142, and a specific friction force is generated between the two shaft bodies, to form an interference fitting connection.

Still refer to FIG. 1. In an optional embodiment, the outer circumferential surface of the first shaft body 141 may be provided with a positioning protrusion 143, and the positioning protrusion 143 may be an annular protrusion disposed along the outer circumferential surface of the first shaft body 141. Similarly, the inner circumferential surface of the second shaft body 142 may be provided with a positioning step 144, and the positioning step 144 may be an annular step surface disposed inside the second shaft body 142. The through hole in the second shaft body 142 may be formed by connecting two sub-holes with different inner diameters, so that the positioning step can be formed between the two connected sub-holes. The positioning protrusion 143 and the positioning step 144 are disposed to implement a positioning connection between the first shaft body 141 and the second shaft body 142, so that the first shaft body 141 and the second shaft body 142 meet an assembly size requirement.

Another connection manner of the first shaft body 141 and the second shaft body 142 is described with reference to FIG. 2. FIG. 2 is a diagram of a structure of the bonding connection between the first shaft body 141 and the second shaft body 142. In addition to interference fit, the first shaft body 141 and the second shaft body 142 may be connected through bonding. For example, the outer circumferential surface of the first shaft body 141 may be provided with a first key slot 145, and an outer circumferential surface of the second shaft body 142 is provided with a second key slot 146 that fits the first key slot 145. The first key slot 145 may be a sink slot, and the second key slot 146 may be a through slot. When the first shaft body 141 and the second shaft body 142 are fastened, the first key slot 145 may be aligned with the second key slot 146, and then connection keys 147 are inserted into both the first key slot 145 and the second key slot 146. The first shaft body 141 and the second shaft body 142 are fastened to each other via the connection keys 147, to implement the bonding connection. The connection key 147 includes but is not limited to a flat key, a spline, or a wedge key.

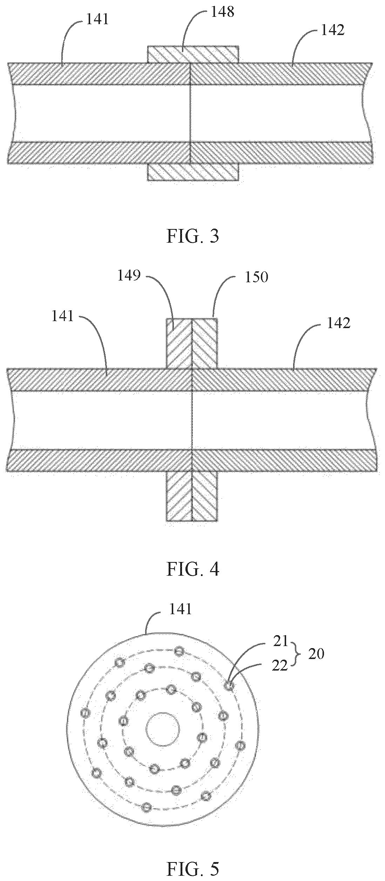

FIG. 3 is a diagram of another connection manner of the first shaft body 141 and the second shaft body 142. As shown in FIG. 3, the first shaft body 141 and the second shaft body 142 may be fastened to each other via a coupling 148.

FIG. 4 is a diagram of another connection manner of the first shaft body 141 and the second shaft body 142. As shown in FIG. 4, an end that is of the first shaft body 141 and that is close to the second shaft body 142 may be provided with a first flange 149, an end that is of the second shaft body 142 and that is close to the first shaft body 141 may be provided with a second flange 150, and the first shaft body 141 and the second shaft body 142 may be fastened to each other via the first flange 149 and the second flange 150.

The foregoing connection manners of the first shaft body 141 and the second shaft body 142 are merely examples for description. A specific connection manner of the first shaft body 141 and the second shaft body 142 is not limited in this application, provided that the first shaft body 141 and the second shaft body 142 can be fastened to each other.

Still refer to FIG. 1. The following describes a connection manner of the rotating shaft, the stator, the first rotor, and the second rotor.

Refer to FIG. 1. The first shaft body 141 may be fastened to the first rotor 11, and a connection manner of the first shaft body 141 and the first rotor 11 may be an interference fit connection or a bonding connection. The second shaft body 142 may be fastened to the second rotor 13, and a connection manner of the second shaft body 142 and the second rotor 13 may be an interference fit connection or a bonding connection. Therefore, after the first shaft body 141 and the second shaft body 142 are fastened to each other to form the rotating shaft 14, there is no relative motion between the first rotor 11 and the rotating shaft 14 in both a circumferential direction and the axial direction of the rotating shaft 14, and there is no relative motion between the second rotor 13 and the rotating shaft 14 in the circumferential direction and the axial direction of the rotating shaft 14. In a working process of the disk motor 10, when the first rotor 11 and the second rotor 13 rotate, the rotating shaft 14 may be driven to rotate together, to implement synchronous rotation of the rotating shaft 14, the first rotor 11, and the second rotor 13.

Still refer to FIG. 1. The stator 12 is rotatably connected to the rotating shaft 14. A bearing 15 may be disposed between the stator 12 and the rotating shaft 14, to implement a rotatable connection between the stator 12 and the rotating shaft 14. It should be noted that, in addition to the rotating shaft 14, the first rotor 11, the second rotor 13, and the stator 12, the disk motor 10 may further include a housing (not shown in the figure) configured to package the foregoing components. The stator 12 may be fastened to the housing, to improve stability of a connection of the stator 12.

Still refer to FIG. 1. In this embodiment of this application, a side surface that is of the first rotor 11 and that faces the stator 12 and a side surface that is of the second rotor 13 and that faces the stator 12 each may be provided with a magnet 16. The side surface that is of the first rotor 11 and that faces the stator 12 and the side surface that is of the second rotor 13 and that faces the stator 12 each may be provided with a groove for accommodating the magnet 16, to mount the magnet 16. The magnet 16 may be of an annular shape, or may be of another shape. A specific shape and size may be set based on a specific performance parameter of the disk motor 10.

FIG. 5 is a diagram of a structure of a side surface that is of the first rotor 11 and that is away from the stator 12 according to an embodiment. As shown in FIG. 1 and FIG. 5, a side surface that is of the first rotor 11 and that is perpendicular to the rotating shaft 14 and away from the stator 12, namely, a side surface that is of the first rotor 11 and that is away from the magnet 16, may be provided with a weight adjustment component 20, and a side that is of the second rotor 13 and that is perpendicular to the rotating shaft 14 and away from the stator 12 may also be provided with a weight adjustment component. The weight adjustment component 20 may be separately disposed on the first rotor 11, or may be separately disposed on the second rotor 13, or may be disposed on both the first rotor 11 and the second rotor 13. For ease of adjustment, the weight adjustment component 20 may be disposed on each the first rotor 11 and the second rotor 13.

In addition to the side surface that is of the first rotor 11 and that is perpendicular to the rotating shaft 14, the weight adjustment component 20 may be alternatively disposed on a peripheral side surface of the first rotor 11. In this case, a corresponding adjustment function may also be implemented. Similarly, the weight adjustment component 20 may also be disposed on a peripheral side surface of the second rotor 13. The weight adjustment component 20 may be separately disposed on the peripheral side surface of the first rotor 11, or may be separately disposed on the peripheral side surface of the second rotor 13, or may be disposed on both the peripheral side surface of the first rotor 11 and the peripheral side surface of the second rotor 13.

The first rotor 11 is used as an example. As shown in FIG. 5, in an embodiment, the weight adjustment component 20 includes a fastening element 21 disposed on the first rotor 11 and a weight adjustment block 22 that is connected to the fastening element 21 through cooperation. The fastening element 21 may be a hole or a convex column, to fasten the weight adjustment block 22. The weight adjustment block 22 may be, for example, a standard nut. In a dynamic balance adjustment process, a weight of the first rotor 11 may be increased or decreased by adding or removing the weight adjustment block 22. With reference to FIG. 1 and FIG. 5, in the dynamic balance adjustment process, remaining imbalance of a rotating unit including the first shaft body 141 and the first rotor 11 may be adjusted by increasing or decreasing a weight. The remaining imbalance may be measured by using a dynamic balance detection device, until the remaining imbalance satisfies a preset dynamic balance standard, for example, a level standard specified in G2.5, G1.0, or the like in GB/T 9239.1, where a unit of the remaining imbalance is mg*mm. Maximum remaining imbalance of a rotating object at a maximum rotational speed may be calculated according to a related test standard in GB/T 9239.1 and a corresponding preset dynamic balance level standard. Correspondingly, for adjustment of remaining imbalance of a rotating unit including the second shaft body 142 and the second rotor 13, refer to the foregoing manner. Details are not described herein again.

When dynamic balance adjustment is performed by using a weight increase method, adjustment may be performed by adding an adjustment block on the fastening element 21 or the like. When dynamic balance adjustment is performed by using a weight decrease method, in addition to adjusting a quantity of weight adjustment blocks 22, adjustment may be performed by providing holes on the first rotor 11 and the second rotor 13. A specific weight adjustment manner is not specifically limited in this embodiment of this application.

Still refer to FIG. 5. In the first rotor 11, there are a plurality of fastening elements 21, and the plurality of fastening elements 21 form concentric rings in a radial direction of the first rotor 11. In addition, in any one of the rings formed by the fastening elements 21, a plurality of fastening elements 21 are evenly arranged in a circumferential direction of the first rotor 11.

For a structure of the weight adjustment component of the second rotor 13, refer to the structure of the weight adjustment component of the first rotor 11. Details are not described herein again.

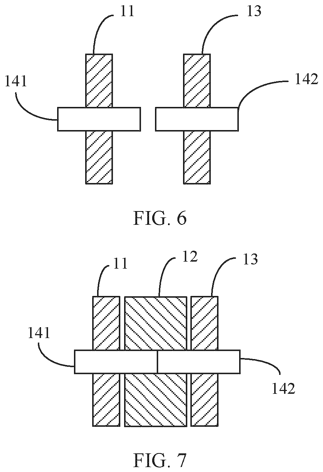

FIG. 6 and FIG. 7 are diagrams of an assembly process of the disk motor 10 according to this application. The following explains and describes the assembly process of the disk motor 10 in embodiments of this application with reference to FIG. 6 and FIG. 7. For example, the assembly process of the disk motor 10 in embodiments of this application includes the following steps.

Step S11: as shown in FIG. 6, sleeve and fasten the first rotor 11 to the first shaft body 141, and perform dynamic balance adjustment on the first shaft body 141 and the first rotor 11 that are fastened to each other.

Step S12: as shown in FIG. 6, sleeve and fasten the second rotor 13 to the second shaft body 142, and perform dynamic balance adjustment on the second shaft body 142 and the second rotor 13 that are fastened to each other.

Step S13: as shown in FIG. 7, sleeve and fasten the stator 12 to the first shaft body 141 or the second shaft body 142, and then fasten the first shaft body 141 and the second shaft body 142 to each other.

A sequence of the foregoing steps S11 to S13 is merely an example for description, and the sequence may be adjusted based on an actual requirement. This is not specifically limited herein.

Dynamic balance adjustment of a rotating unit including the first shaft body 141 and the first rotor 11 includes the following steps: adjusting the weight adjustment component, for a deviation between a centroid and a rotation center of the rotation unit including the first shaft body 141 and the first rotor 11 to satisfy a preset dynamic balance level standard, for example, a level standard specified in G2.5, G1.0, and the like in GB/T 9239.1, at a preset rotational speed.

Similarly, dynamic balance adjustment of a rotating unit including the second shaft body 142 and the second rotor 13 includes the following steps: adjusting the weight adjustment component, for a deviation between a centroid and a rotation center of the rotation unit including the second shaft body 142 and the second rotor 13 to satisfy the preset dynamic balance level standard, for example, the level standard specified in G2.5, G1.0, and the like in GB/T 9239.1, at the preset rotational speed.

In the disk motor 10 in embodiments of this application, the rotating shaft 14 is divided into the first shaft body 141 and the second shaft body 142 that are detachably connected to each other. Dynamic balance adjustment is first performed on each rotor system before assembly, and the disk motor 10 is assembled after the dynamic balance adjustment is performed on each rotor system. When dynamic balance adjustment is performed on a single rotor system, a dynamic balance indicator of the single rotor system may be strictly controlled, so that final overall dynamic balance of the disk motor 10 meets a use requirement. In the assembly process, dynamic balance of an entire machine introduces only one assembly error. Impact of the error can be eliminated by remaining unbalance and assembly size errors (for example parameters such as interference and coaxiality) of two rotor systems, to effective control remaining unbalance of the entire machine. In addition, in the assembly method for the disk motor 10 in embodiments of this application, assembly convenience is ensured, and quality of dynamic balance of the entire machine can be significantly improved.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A disk motor, comprising a rotating shaft and a first rotor, a stator, and a second rotor that are sleeved on the rotating shaft, wherein the first rotor, the stator, and the second rotor are sequentially spaced apart, the stator is rotatably connected to the rotating shaft, the rotating shaft comprises a first shaft body and a second shaft body that are detachably connected to each other, the first shaft body is fastened to the first rotor, and the second shaft body is fastened to the second rotor.

2. The disk motor according to claim 1, wherein a connection manner of the first shaft body and the second shaft body comprises an interference fit connection, a bonding connection, a coupling connection, a pin connection, or a flange connection.

3. The disk motor according to claim 1 or 2, wherein at least one of a side surface that is of the first rotor and that is perpendicular to the rotating shaft and away from the stator and a side surface that is of the second rotor and that is perpendicular to the rotating shaft and away from the stator is provided with a weight adjustment component.

4. The disk motor according to claim 1 or 2, wherein at least one of a circumferential surface of the first rotor and a circumferential surface of the second rotor is provided with a weight adjustment component.

5. The disk motor according to claim 3 or 4, wherein the weight adjustment component comprises a fastening element disposed on the first rotor and/or the second rotor and a weight adjustment block connected to the fastening element through cooperation.

6. The disk motor according to claim 5, wherein the fastening element is disposed on the side surface that is of the first rotor and that is perpendicular to the rotating shaft and away from the stator, there are a plurality of fastening elements, and the plurality of fastening elements form concentric rings in a radial direction of the first rotor.

7. The disk motor according to claim 6, wherein in any one of the rings formed by the fastening elements, a plurality of fastening elements are evenly arranged in a circumferential direction of the first rotor.

8. The disk motor according to claim 5, wherein the fastening element is disposed on the side surface that is of the second rotor and that is perpendicular to the rotating shaft and away from the stator, there are a plurality of fastening elements, and the plurality of fastening elements form concentric rings in a radial direction of the second rotor.

9. The disk motor according to claim 8, wherein in any one of the rings formed by the fastening elements, a plurality of fastening elements are evenly arranged in a circumferential direction of the second rotor.

10. The disk motor according to any one of claims 5 to 9, wherein the fastening element comprises an opening or a protruding column.

11. An assembly method for the disk motor according to any one of claims 1 to 10, comprising:
performing dynamic balance adjustment on the first shaft body and the first rotor that are fastened to each other, and performing dynamic balance adjustment on the second shaft body and the second rotor that are fastened to each other; and
sleeving the stator on at least one of the first shaft body and the second shaft body, and fastening the first shaft body and the second shaft body to each other.

12. The assembly method according to claim 11, wherein the performing dynamic balance adjustment on the first shaft body and the first rotor that are fastened to each other comprises:
adjusting the weight adjustment component, for a deviation between a centroid and a rotation center of a rotation unit comprising the first shaft body and the first rotor to satisfy a preset dynamic balance level standard at a preset rotational speed.

13. The assembly method according to claim 11, wherein the performing dynamic balance adjustment on the second shaft body and the second rotor that are fastened to each other comprises:
adjusting the weight adjustment component, for a deviation between a centroid and a rotation center of a rotation unit comprising the second shaft body and the second rotor to satisfy a preset dynamic balance level standard at a preset rotational speed.

14. A powertrain, comprising a transmission mechanism and the disk motor according to any one of claims 1 to 10 that is connected to the transmission mechanism.

15. A vehicle, comprising a vehicle frame and a drive system mounted on the vehicle frame, wherein the drive system comprises a wheel and the disk motor according to any one of claims 1 to 10, and the disk drive motor is configured to drive the wheel to rotate.
